# EUROPÄISCHE PATENTSCHRIFT

(11) **EP 2 382 678 B1**
(45) Veröffentlichungstag und Bekanntmachung des Hinweises auf die Patenterteilung: **21.06.2017**
(21) Anmeldenummer: 09740902.3
(22) Anmeldetag: 29.10.2009
(51) Int. Cl.: H01M 2/10, H01M 10/34, H01M 10/625, H01M 10/0525, H01M 10/647, H01M 10/6555, H01M 10/613

(54) **BATTERIEMODUL MIT ISOLIERENDEM SCHICHTELEMENT**
BATTERY MODULE WITH INSULATING LAYER ELEMENT
MODULE DE BATTERIE À COUCHE ISOLANTE

(30) Priorität: 29.12.2008 DE 102008055162
(43) Veröffentlichungstag der Anmeldung: 02.11.2011
(73) Patentinhaber: Robert Bosch GmbH, 70442 Stuttgart (DE)
(72) Erfinder: DORSCH, Niko, 71065 Sindelfingen (DE)
(86) Internationale Anmeldenummer: PCT/EP2009/064258
(87) Internationale Veröffentlichungsnummer: WO 2010/076055

(56) Entgegenhaltungen:
- WO-A1-99/05746
- WO-A1-2008/050211
- US-A1- 2008 299 449

## Beschreibung

Die Erfindung betrifft ein Batteriemodul mit einem Batteriegehäuse in dem mindestens eine Batteriezelle aufgenommen ist.

### Stand der Technik

Ein derartiges Batteriemodul ist bekannt und wird vermehrt bei Fahrzeugen, insbesondere in Hybrid- und Elektrofahrzeugen, und stationären Anwendungen, wie beispielsweise Windkraftanlagen verwendet. Dabei umfasst der Begriff Batteriemodul auch Akkumulatoren, welche über viele Zyklen elektrisch geladen und wieder entladen werden können, wobei das Batteriemodul aus einzelnen Zellen, den Batteriezellen, die eine für die verwendete Materialkombination der Zelle charakteristische Spannung liefern, besteht. Um aus diesen Batteriezellen ein Batteriemodul aufzubauen, die die geforderten Leistungs- und Energiemengen liefern kann, werden die einzelnen Batteriezellen elektrisch in Serie und/oder parallel geschaltet. Ein Batteriemodul umfasst dabei mehrere miteinander elektrisch verschalteter Batteriezellen. Zwischen den einzelnen Batteriezellen befindet sich in der Regel eine Radiatorplatte, welche einen batterieinternen Wärmetransfer zwischen den Batteriezellen und einer Wärmetransporteinrichtung ermöglicht, wobei die Wärmetransporteinrichtung eine das Batteriemodul als ganzem zugeordnete Einrichtung zur Zufuhr von Wärme zu den Batteriezellen und/oder zur Abfuhr der Wärme von der Batteriezellen ist. Beim Auf- und Entladen der einzelnen Batteriezellen kommt es je nach Ladezustand zu einer erhöhten Erwärmung der einzelnen Batteriezellen, welche im ungünstigsten Fall bis hin zu einem thermisch induziertem Versagen der jeweiligen Batteriezelle und/oder des gesamten Batteriemoduls führen kann. Aus diesem Grunde werden hohe Anforderungen an eine möglichst schnelle, effiziente und gleichmäßige Abfuhr der auftretenden Verlustwärme gestellt.

In der WO 2008/050211 A1 ist ein Batteriezusammenbau mit mehreren Batteriezellen offenbart, wobei die Batteriezellen eine Schicht aus einer Kathode, einer Anode und einem Separatorelement aufweisen.

Die US 2008/0299449 A1 offenbart eine Kühlstruktur für eine Lithium-Ionen-Batterie.

Die WO 99/05746 A zeigt einen Energiespeicher mit Dünnschichtzellen, wobei zwischen den Dünnschichtzellen ein federndes Dichtelement vorgesehen ist.

Die WO 2008/050211 A1 zeigt ein Batteriemodul, umfassend ein Batteriegehäuse, in dem mindestens eine Batteriezelle aufgenommen ist, wobei die Batteriezelle eine Schicht aus einer Kathode, einer Anode und einem Separatorelement aufweist. Die Schicht der Batteriezelle weist ein weiteres isolierendes Schichtelement auf. Eine Radiatorplatte ist zwischen zwei benachbarten Batteriezellen angeordnet und dient der Wärmeabfuhr. Das isolierende Schichtelement ist benachbart zu der Radiatorplatte angeordnet, befindet sich zwischen Batteriezelle und Mantelfolie. Die Batteriezelle weist eine Mehrzahl von Schichten aus einer Kathode, einer Anode und einem Separatorelement auf. Das isolierende Schichtenelement ist eine Folie.

Die US 2008/0299449 A1 beschreibt ein Batteriemodul umfassend ein Batteriegehäuse, in dem mindestens eine Batteriezelle aufgenommen ist, wobei die Batteriezelle eine Mehrzahl aus Schichten aus einer Kathode, einer Anode und einem Separatorelement aufweist. Die Schicht der Batteriezelle weist eine weitere isolierende Schicht auf, die in die Mantelfolie der Pouch-Zelle integriert ist und auf die Zelle umhüllende Metallfolie aufgebracht ist. Zwischen zwei benachbarten Batteriezellen ist eine Radiatorplatte zur Wärmeabfuhr angeordnet.

Die WO 99/05746 A beschreibt schließlich ein Batteriemodul umfassend ein Batteriegehäuse, in dem mindestens eine Batteriezelle aufgenommen ist, wobei die Batteriezelle eine Mehrzahl aus Schichten aus einer Kathode, einer Anode und einem Polymerelektrolyt als Separatorelement alleine oder in Kombination mit einer Polypropylenfolie besteht. Die Schicht der Batteriezelle weist ein weiteres Schichtelement in Form eines Schaumstoffes auf.

### Offenbarung der Erfindung

Die Lösung der Aufgabe erfolgt erfindungsgemäß durch ein Batteriemodul mit den Merkmalen des Anspruchs 1. Vorteilhafte Ausgestaltungen der Erfindung sind in den Unteransprüchen angegeben.

Das erfindungsgemäße Batteriemodul umfasst ein Batteriegehäuse in dem mindestens eine Batteriezelle aufgenommen ist, wobei die Batteriezelle mindestens einen Schichtaufbau aus einer Kathode, einer. Anode und einem Separatorelement aufweist. Dabei ist vorgesehen, dass der Schichtaufbau der Batteriezelle mindestens ein weiteres isolierendes Schichtelement aufweist.

Das Batteriemodul ist vorzugsweise eine wiederaufladbare Batterie (der Akkumulator), wobei diese ein über viele Zyklen elektrisch ladbarer und wieder entladbarer elektrischer Energiespeicher ist, der einzelne galvanische Zellen, die Batteriezellen, aufweist, die eine für die verwendete Materialkombination der jeweiligen Zelle charakteristische Spannung liefern. Um eine geforderte Leistungs- und Energiekapazität der Batterie zu erreichen, werden die einzelnen Batteriezellen elektrisch in Serie und/oder parallel geschaltet. Ein kompaktes Batteriemodul umfasst dabei mehrere miteinander elektrisch verschalteter Batteriezellen, wobei die einzelne Batteriezelle die kleinste Elemente-Einheit der Batterie ist. Das Batteriegehäuse ist insbesondere als eine das Batteriemodul vollumfänglich umgebende Wärmetransferhülse ausgebildet, so dass das Batteriegehäuse eine Art Spannhülse zur Verwirklichung einer als Pressverband ausgebildeten Verbindung zwischen den einzelnen Batteriezellen, den Radiatorplatten und dem Batteriegehäuse ausbildet. Durch das Einbringen eines erfindungsgemäßen isolierenden Schichtelementes in den Schichtaufbau der Batteriezellen, wird ermöglicht, dass eine durch Aufladen oder Entladen der jeweiligen Batteriezelle auftretende Erwärmung derart von den benachbarten Batteriezellen abgegrenzt werden kann, dass eine zusätzliche Erwärmung der benachbarten Batteriezellen reduziert, bzw. sogar weitestgehend vermieden werden kann.

Zwischen zwei benachbarten Batteriezellen ist eine Radiatorplatte zur besseren Wärmeabfuhr angeordnet. Ferner ermöglichen diese Radiatorplatten einen Batterieinternen Wärmetransfer zwischen den Batteriezellen und der Wärmetransporteinrichtung, wobei die Wärmetransporteinrichtung eine der Batterie als ganze zugeordnete Einrichtung zur Zufuhr von Wärme zu der Batterie und/oder zur Abfuhr der Wärme von der Batterie ist. Erfindungsgemäß ist das isolierende Schichtelement benachbart zu der Radiatorplatte angeordnet, so dass eine Batteriezelle auf einer Seite unmittelbar an eine Radiatorplatte angrenzt und auf der anderen Seite ein isolierendes Schichtelement aufweist. Da im bekannten Stand der Technik Radiatorplatten und isolierenden Schichten als eine Art Sandwich: Batteriezelle, Radiatorplatte, isolierende Schicht, Radiatorplatte, Batteriezelle eingebaut werden, ist es durch die vorliegende Neue Beschreibungsseite 4

Erfindung möglich, sowohl Radiatorplatten als auch isolierende Schichtelemente einzusparen, wodurch Gewicht und/oder Volumen der Batteriemodule reduziert werden können. Die Radiatorplatten bestehen dabei - zumindest teilweise - aus einem Material mit hoher thermischer Leitfähigkeit, vorzugsweise einem Metall mit geringem elektrischem Widerstand. Dieses Metall ist insbesondere Kupfer oder Aluminium.

Die Batteriezelle weist bevorzugt eine Mantelfolie auf, in welche der Schichtaufbau von Kathode, Anode und Separatorelement zusätzlich verschweißt werden kann. Gemäß einer bevorzugten Ausführungsform der Erfindung ist dabei vorgesehen, dass der Schichtaufbau der jeweiligen Batteriezelle eine Mehrzahl von Schichten aus Kathode, Anode und Separatorelement aufweist, wobei vorteilhafterweise auch eine Mehrzahl von isolierenden Schichtenelementen eingefügt werden kann. Alternativ kann vorgesehen sein, dass das isolierende Schichtenelement direkt in die Mantelfolie integriert oder auf diese aufbringbar ist, so dass sowohl Volumen und/oder Gewicht eingespart werden kann.

Das isolierende Schichtenelement selber ist eine isolierende Folie und/oder ein geschlossenporiger Schaumstoff, welche in das Batteriemodul eingebracht wird, um einen gezielten Wärmetransfer innerhalb eines Batteriemoduls zu gewährleisten.

Gemäß einer bevorzugten Ausführungsform der Erfindung ist vorgesehen, dass das Batteriemodul mehrere prismatisches Batteriezellen aufweist, dabei sind die Batteriezellen vorzugsweise parallel zueinander ausgerichtet und bilden einen Stapel, wobei zwischen jeweils zwei benachbarten Batteriezellen eine Radiatorplatte angeordnet ist. Die Batteriezellen innerhalb eines Batteriemoduls können vorteilhafterweise in dem Batteriegehäuse durch ein beidseitiges Druckausüben in Stapelrichtung der Batteriezellen verspannt werden, so dass jeder Zeit ein direkter thermischer Kontakt zwischen den Radiatorplatten und den einzelnen Batteriezellen gewährleistet werden kann.

Die Struktur des Batteriemoduls erlaubt eine Wahl des Materials für das Batteriegehäuse. Da dieses nicht mehr soviel Volumen und/ oder Gewicht aufnehmen muss. Aufgrund dessen ist es möglich, auch leichtere und dünnere Neue Beschreibungsseite 4a

Materialien, wie beispielsweise Kunststoffe, für das Batteriegehäuse zu verwenden. Weitere Materialien für das Batteriemodul können insbesondere Harzmaterialien, Metalle oder Legierungen sein, welche unter Berücksichtigung der auftretenden Kräfte, des Gewichts, des Volumens und/oder der Leistungsfähigkeit individuell auswählbar sind.

Das Batteriemodul ist insbesondere ein Batteriemodul für ein Hybridfahrzeug und/oder ein Elektrofahrzeug, wobei bevorzugt eine Nickel-Metallhydrid-Batterie oder eine Lithium-Ionen-Batterie verwendet wird.

Nachfolgend wird die Erfindung unter Bezugnahme auf die anliegenden Zeichnungen näher erläutert. Dabei ist zu beachten, dass die Figuren nur einen beschreibenden Charakter haben und nicht dazu gedacht sind, die Erfindung in irgendeiner Form einzuschränken.

Es zeigen:
- Fig. 1: ein Batteriemodul mit prismatischen Batteriezellen gemäß einer ersten Ausführungsform der Erfindung;
- Fig. 1a: eine Detailansicht des Ausschnittes A aus Fig. 1;
- Fig. 1b: das Batteriemodul aus Fig. 1 mit eingetragenem Wärmestrom;
- Fig. 2: eine Batteriezelle mit einem Schichtaufbau und einer die Batteriezelle umgebenden Mantelfolie;

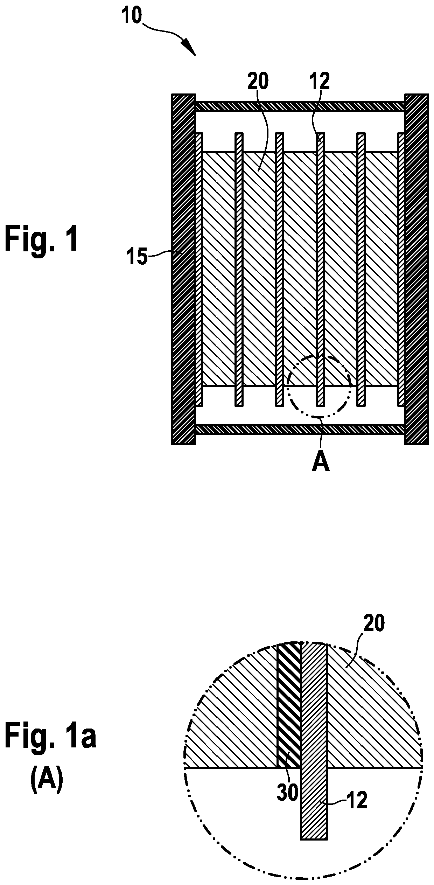

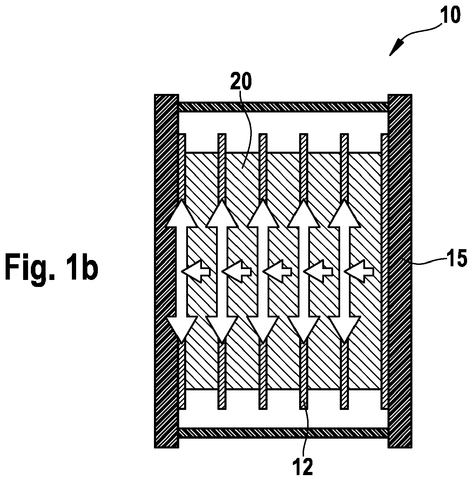

Die Figur 1 zeigt ein Batteriemodul 10 mit fünf flach, bzw. prismatisch ausgebildeten Batteriezellen 20, welche von einem Batteriegehäuse 15 umgeben sind. Jedes der Batteriezellen 20 weist einen in Figur 1 nicht im Einzelnen dargestellten Schichtaufbau aus mindestens einer Kathode, einer Anode und einem Separatorelement auf und wird durch eine Radiatorplatte 12 zur Wärmeabfuhr von der jeweils benachbarten Batteriezelle 20 und dem Batteriegehäuse 15 getrennt. Die Radiatorplatten 12 und die flach, bzw. prismatischen Batteriezellen 20 bilden das Batteriemodul 10, wobei zwischen jeweils zwei benachbarten Batteriezellen 20 eine Radiatorplatte 12 angeordnet ist. Das Batteriemodul 10 besteht aus alternierend angeordneten Radiatorplatten 12 und Batteriezellen 20, wobei die Stapelfolge jeweils mit einer Radiatorplatte 12 beginnt und einer Radiatorplatte 12 endet. Dabei ist jede Seitenflächen einer Batteriezelle 20 - zumindest bereichsweise - in thermischem Kontakt mit einer zugeordneten Seitenfläche der als Wärmetransportelement ausgebildeten Radiatorplatten 12. Dieser thermische Kontakt ist ein direkter Kontakt oder ein Kontakt über ein zusätzliches elektrisch isolierendes Wärmeleitelement, welches zwischen den einander gegenüberliegenden Seitenflächen der Batteriezellen 20 und der Radiatorplatte 12 angeordnet ist.

Jede der Radiatorplatten 12 ist an ihrem einen Ende mit einem parallel zur Stapelrichtung verlaufenden Teil einer Wärmetransporteinrichtung (nicht dargestellt) verbunden. Durch diese Verbindungen der Radiatorplatten 12 mit der Wärmetransporteinrichtung sind diese beiden Komponenten thermisch miteinander in Kontakt. Dabei kann die Wärmetransporteinrichtung gleichzeitig einen Batteriesockel ausbilden, bzw. direkt in das Batteriegehäuse 15 integriert sein und bevorzugt eine hohe Wärmekapazität aufweisen.

Beim Auf- und Entladen des Batteriemoduls 10 kommt es je nach Ladezustand der einzelnen Batteriezellen 20 zu einer erhöhten Erwärmung der jeweiligen Batteriezellen 20. Um diese Verslustwärme möglichst schnell abzuführen ist erfindungsgemäß vorgesehen, dass in den Schichtaufbau der Batteriezelle 20 mindestens ein weiteres isolierendes Schichtelement 30 eingefügt wird. Fig. 1 a zeigt eine Detailansicht des Ausschnitts A aus der Fig. 1 und veranschaulicht eine möglich Position, in der das isolierende Schichtelement 30 in die Batteriezelle 20 eingefügt werden kann. Dabei ist das Schichtelement 30 in den Schichtaufbau der Batteriezelle 20 im Wesentlichen einseitig und benachbart zu einer einzigen Radiatorplatten 12 eingebracht, so dass die Wärme einer jeden Batteriezelle 20 über eine, der anderen Radiatorplatte 12 gegenüberliegenden Radiatorplatte 12 abgeführt werden kann (Fig. 1 b). Auf diese Weise ist es möglich, zwischen zwei Batteriezellen 20 nur eine einzige Radiatorplatte 12 und ein isolierendes Schichtelement 30 einzubringen, wodurch das Volumen und das Gewischt der einzelnen Batteriezellen 20 und des gesamten Batteriemoduls 10 reduziert werden können.

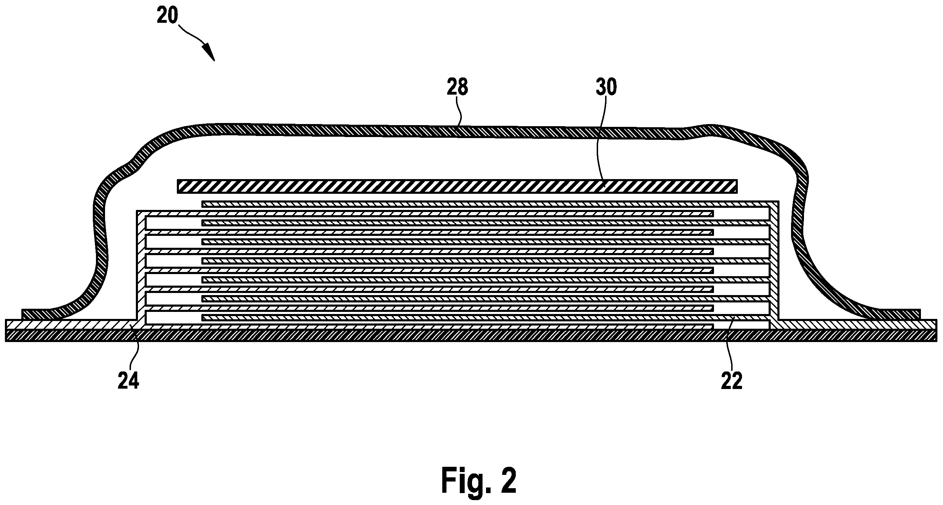

Wie in Figur 2 dargestellt, ist auch eine Stapelung von mehreren abwechselnden Schichten aus Kathoden 22, Anoden 24 und Separatorelementen (nicht dargestellt) denkbar. Dabei kann das isolierende Schichtelement 30 zusätzlich auf die Stapelung aufgelegt und zusammen mit diesen in eine Mantelfolie 28 eingeschweißt werden, wobei das Schichtelement 30 vorzugsweise eine isolierende Folie oder einen isolierenden geschlossenporigen Schaumstoff umfasst, welcher den Batterieelektrolyten weder aufsaugen noch mit diesem reagieren darf. Dabei ist unerheblich, ob das isolierende Schichtelement 30 sich, wie in Fig. 2 dargestellt, innerhalb der Batteriezelle 20 befindet oder unmittelbar in die Mantelfolie 28 integriert ist (nicht dargestellt).

Es ergibt sich folgende Funktion: Durch das isolierende Schichtelement 30 kann das Gewicht und Volumen der Batteriezellen 20 und des Batteriemoduls 10 reduziert werden, im Wesentlichen ohne den Wärmetransfer innerhalb des Batteriemoduls 10 und zwischen den Batteriezellen 20 negativ zu beeinflussen. Die im Betrieb des Batteriemoduls 10 entstehende Abwärme der Batteriezellen 20 wird weiterhin über die Radiatorplatten 12 und deren Verbindung zu der Wärmetransporteinrichtung abgeführt, wodurch erreicht wird, dass alle Batteriezellen 20 des Batteriemoduls 10 nahezu die gleiche Temperatur aufweisen, wobei der Temperaturunterschied zwischen den Seitenflächen der Batteriezellen 20, der Wärmetransporteinrichtung und auch der einzelnen Seitenflächen untereinander im gesamten Arbeits-Temperaturbereich des Batteriemoduls 10 nur wenige Kelvin (K) beträgt.

## Patentansprüche

1. Batteriemodul (10) umfassend ein Batteriegehäuse (15) in dem Batteriezellen (20) und Radiatorplatten (12) aufgenommen sind, wobei eine Batteriezelle (20) eine Schicht aus einer Kathode (22), einer Anode (24) und einem Separatorelement (26) aufweist sowie ein weiteres isolierendes Schichtelement (30) aufweist, welches insbesondere als isolierende Folie oder als geschlossenporiger Schaumstoff ausgebildet ist,
wobei zwischen zwei benachbarten Batteriezellen (20) eine Radiatorplatte (12), welche zu einer Wärmeabfuhr dient, angeordnet ist,
und das isolierende Schichtelement (30) benachbart zu der Radiatorplatte (12) angeordnet ist,
so dass eine Batteriezelle (20) auf einer Seite unmittelbar an eine Radiatorplatte (12) angrenzt und auf der anderen Seite ein isolierendes Schichtelement (30) aufweist.

2. Batteriemodul (10) nach Anspruch 1 **dadurch gekennzeichnet, dass** die Batteriezelle (20) eine Mantelfolie (28) aufweist.

3. Batteriemodul (10) nach einem der Ansprüche 1 bis 2, **dadurch gekennzeichnet, dass** die Batteriezelle (20) eine Mehrzahl von Schichten aus einer Kathode (22), einer Anode (24), und einem Separatorelement (26) aufweist.

4. Batteriemodul (10) nach einem der Ansprüche 1 bis 3, **dadurch gekennzeichnet, dass** das isolierende Schichtelement (30) in die Mantelfolie (28) integriert ist.

5. Batteriemodul (10) nach einem der Ansprüche 1 bis 4, **dadurch gekennzeichnet, dass** das isolierende Schichtenelementen (30) auf die Mantelfolie (28) aufbringbar ist.

6. Batteriemodul (10) nach einem der vorhergehenden Ansprüchen, **dadurch gekennzeichnet, dass** das Batteriemodul (10) ein Batteriemodul für ein Hybridfahrzeug und/oder ein Elektrofahrzeug ist.

7. Batteriemodul (10) nach einem der vorhergehenden Ansprüchen, **dadurch gekennzeichnet, dass** das Batteriemodul (10) eine Nickel-Metallhydrid-Batterie oder eine Lithium-Ionen-Batterie ist.

## Claims

1. Battery module (10) comprising a battery housing (15) in which battery cells (20) and radiator plates (12) are accommodated, wherein a battery cell (20) comprises a layer made up of a cathode (22), an anode (24) and a separator element (26) and has a further insulating layer element (30), which is formed in particular as an insulating film or as a closed-cell foam, wherein a radiator plate (12), which serves for emitting heat, is arranged between two adjacent battery cells (20), and the insulating layer element (30) is arranged adjacent to the radiator plate (12), so that a battery cell (20) on one side directly adjoins a radiator plate (12) and on the other side has an insulating layer element (30).

2. Battery module according to Claim 1, **characterized in that** the battery cell (20) has an enclosing film (28).

3. Battery module (10) according to either of Claims 1 and 2, **characterized in that** the battery cell (20) has a plurality of layers made up of a cathode (22), an anode (24) and a separator element (26).

4. Battery module (10) according to one of Claims 1 to 3, **characterized in that** the insulating layer element (30) is integrated in the enclosing film (28).

5. Battery module (10) according to one of Claims 1 to 4, **characterized in that** the insulating layer element (30) can be applied to the enclosing film (28).

6. Battery module (10) according to one of the preceding claims, **characterized in that** the battery module (10) is a battery module for a hybrid vehicle and/or an electric vehicle.

7. Battery module (10) according to one of the preceding claims, **characterized in that** the battery module (10) is a nickel-metal hydride battery or a lithium-ion battery.

## Revendications

1. Module de batterie (10) comprenant un boîtier de batterie (15) dans lequel sont logés des éléments de batterie (20) et des panneaux de radiateur (12), selon lequel un élément de batterie (20) présente une couche constituée d'une cathode (22), d'une anode (24) et d'un élément séparateur (26) et présente également un autre élément isolant formant couche (30), lequel est conçu en particulier sous la forme d'un film isolant ou sous la forme d'une mousse à alvéoles fermées, selon lequel un panneau de radiateur (12), lequel sert à une dissipation de la chaleur, est disposé entre deux éléments de batterie (20) adjacents, et l'élément isolant formant couche (30) est disposé de manière adjacente au panneau de radiateur (12) de telle sorte qu'un élément de batterie (20) est directement contigu à un panneau de radiateur (12) sur une face et présente un élément isolant formant couche (30) sur l'autre face.

2. Module de batterie (10) selon la revendication 1, **caractérisé en ce que**
l'élément de batterie (20) présente un film enveloppant (28).

3. Module de batterie (10) selon l'une des revendications 1 à 2,
**caractérisé en ce que**
l'élément de batterie (20) présente une pluralité de couches qui sont constituées d'une cathode (22), d'une anode (24) et d'un élément séparateur (26).

4. Module de batterie (10) selon l'une des revendications 1 à 3,
**caractérisé en ce que**
l'élément isolant formant couche (30) est intégré dans le film enveloppant (28).

5. Module de batterie (10) selon l'une des revendications 1 à 4,
**caractérisé en ce que**
l'élément isolant formant couche (30) peut être mis en place sur le film enveloppant (28).

6. Module de batterie (10) selon l'une des revendications précédentes,
**caractérisé en ce que**
le module de batterie (10) est un module de batterie pour un véhicule hybride et/ou un véhicule électrique.

7. Module de batterie (10) selon l'une des revendications précédentes,
**caractérisé en ce que**
le module de batterie (10) est une batterie au nickel-hydrure de métal ou une batterie lithium-ions.
